# EUROPEAN PATENT SPECIFICATION

(11) **EP 3 324 737 B1**
(45) Date of publication and mention of the grant of the patent: **13.07.2022**
(21) Application number: 16762896.5
(22) Date of filing: 21.07.2016
(51) Int. Cl.: A01N 25/04, A01N 25/30, A01N 59/26, A01P 3/00, A01P 13/00

(54) **STABLE AGRICULTURAL COMPOSITIONS**
STABILE LANDWIRTSCHAFTLICHE ZUSAMMENSETZUNGEN
COMPOSITIONS AGRICOLES STABLES

(30) Priority: 21.07.2015 NL 2015199
(43) Date of publication of application: 30.05.2018
(73) Proprietor: Ceradis B.V., 6708 PW Wageningen (NL)
(72) Inventor: VAN DER KRIEKEN, Wilhelmus Maria, 6708 PW Wageningen (NL); JANS, Christiaan Gerardus Johannes Maria, 6708 PW Wageningen (NL)
(74) Representative: V.O.
(86) International application number: PCT/NL2016/050544
(87) International publication number: WO 2017/014634

(56) References cited:
- WO-A1-00/60942
- WO-A1-2009/077613
- WO-A1-2010/102102
- WO-A1-2014/039379
- WO-A1-2014/134235
- WO-A2-2008/036864
- WO-A2-2009/150076
- WO-A2-2011/065832
- US-A- 5 356 861
- US-B1- 6 655 081

## Description

### FIELD

The present invention relates to stable compositions comprising an agricultural active ingredient and high concentrations of a salt selected from a bicarbonate salt and/or a phosphite salt. The invention further relates to methods for protecting an agricultural plant or plant part against a pathogen and to methods of preventing, reducing and/or eliminating the presence of a pathogen on a plant or on one or more plant parts, comprising applying a composition of the invention to said plant or plant part.

### INTRODUCTION

Plants are often threatened by various pathogenic micro-organisms like fungi, viruses and bacteria. To overcome the problem of infections with these micro-organisms, large quantities of agricultural active ingredients, in particular biocides, such as fungicides and bactericides, are applied. There is an ongoing concern about the possible negative impact of biocides on the environment and on human health. As a consequence, the demands with respect to sustainability of chemical pest control are continually increasing, as are the costs to bring new pesticides to the market.

In principle, reduced impact of chemical pesticides on the environment can be achieved by bringing new, environmentally sound pesticide products to the market or by increasing the efficacy and thereby reducing the dose rate of existing products. Because governmental procedures to approve new chemicals are often difficult and slow, few new active ingredients have been approved in recent years. Therefore, much attention has been given to increase efficacy of crop protection products by improving the formulation of these products, often by optimizing the adjuvants in the formulation. For example, US 6,655,081 describes a new substrate for growing mushrooms comprising a polyene fungicide such as natamycin, which allows harvesting at least one day earlier.

Potassium phosphite, also called potassium phosphonate, is a salt of phosphonic acid with the formula K2HPO3 or KH2PO3, or mixtures thereof. Potassium phosphite can be used as a fungicide against oomycetes in various crops, and was shown to be effective against downy mildew (Plasmopara viticola). WO 2009/0077613 describes a process for the treatment of banana and potato plants, comprising the step of applying a composition comprising phosphites and a polyene antifungal agent. Products based on potassium phosphite have also been used as plant strengtheners. Phosphites, such as potassium phosphite, have shown low toxicity in rodents after oral administration as well as after dermal administration and inhalatory exposure. No safety concerns are known for operators and bystanders, nor for consumers. Phosphonates are neither skin sensitizers nor skin or eye irritants (EFSA J, 2012. 10(12): 2963).

Most agricultural active ingredients are not or hardly dissoluble in water. A combination of an agricultural active ingredient with high concentrations of a salt such as, for example, bi carbonate and/or phosphite, results in a suspension that is not stable, meaning that sedimentation and/or separation of phases take place over time.

WO2010/102102 A1, WO 2014/134235 A1 and US 5356861A tried to solve this dissolution problem with the addition of an alkyl polysaccharide surfactant. WO 2008/036864 A2 tried to solve this problem with the addition of a styrene/methacrylic acid copolymer. WO 2014/039379 A1 tried to solve this problem with the addition of polymeric crystallization inhibitors, while WO 2011/065832 A2 proposed to add a lignin compound.

Furthermore, WO 2009/150076 describes a solid composition of an active ingredient with a calcium salt of phosphorous acid, lignosulfonate and a surfactant, such as alkylpolyglucoside. WO 00/60942 describes a composition including an agricultural active agent and a dispersing agent including a water dispersible styrene (meth)acrylic copolymer and a wetting agent. These documents, however, do not mention the use of a salt, such as phosphite salt.

The present invention solves this dissolution problem by providing a composition comprising 1-50 % (w/w) of an agricultural active ingredient, 5-70 % (w/w) of a salt, 1-10 % (w/w) of an alkyl polysaccharide, and a 0.2-3 % (w/w) of a styrene (meth)acrylic copolymer, wherein the salt is selected from a bicarbonate salt and/or a phosphite salt, wherein the composition is in the form of a suspension concentrate or a dispersion concentrate. It was found by the present inventors that a stable composition of an agricultural active ingredient and a salt could be obtained in the presence of both an alkyl polysaccharide and a styrene (meth)acrylic copolymer. Surprisingly, the presence of a salt selected from a bicarbonate salt and/or a phosphite salt, in combination with an alkyl polysaccharide and a styrene (meth)acrylic copolymer, allowed the stable formulation of a diverse range of agricultural active ingredients, without a need to select a different set of surfactants for every individual agricultural active ingredient.

Methods for determining the stability of a composition are known in the art and include accelerated storage tests by heating, according to CIPAC MT 46.1, MT 46.2, and MT 46.3.

The pH of a composition of the invention preferably is between pH=4 and pH=9, preferably between pH=6.5 and pH=8.5. A person skilled in the art will appreciate that a composition of the invention that comprises folpet ((N-(trichloromethylthio)phthalimide) preferably has a pH of between pH=6.5 and pH=7.5.

Said agricultural active ingredient preferably is a herbicide and/or a chemical pesticide.

A preferred herbicide is selected from, or comprises, acetochlor, alachlor, atrazine, linuron, prometryn, ametryn, S-metolachlor, terbuthylazine, cyanazine, bendioxide, simazine, sulcotrione, terbutryn, bendioxide, benfluralin, bromacil, bromoxynil, ioxynil, carfentrazone-ethyl, metsulfuron-methyl, chloridazon, chlorimuron-ethyl, metribuzin, chlorsulfuron, chlorthal-dimethyl, clodinafoppropargyl, clomazone, clopyralid, cyanazine, cycloxydim, 2,4-D (dimethyl amine salt), dicamba (dimethyl amine salt), diclofop-methyl, diflufenican, dimethenamid, sdimethenamid, diquat dibromide, paraquat dichloride, diuron, hexazinone, metribuzin, sulcotrine, terbacil, ethametsulfuron-methyl, florasulam, flumetsulam, fluazifop-P-butyl, flufenacet, flumetsulam, flumetsulam, flumioxazin, fluometuron, flurochloridone, fluroxypyr, fomesafen, , halosulfuron, haloxyfop-R methyl ester, hexazinone, imazapyr, iodosulfuron-methylsodium, mesosulfuron-methyl, isoxaflutole, linuron, mesotrione, mesotrione, S-metolachlor, metazachlor, metam sodium (sodium methylaminomethanedithioate), metribuzin, metsulfuron-methyl, MSMA, nicosulfuron, oxyfluorfen, pendimethalin, propachlor, propaquizafop, propyzamide, prosulfuron, pyraflufen-ethyl, pyridate, rimsulfuron, simazine, sulfentrazone, sulfosulfuron, tebuthiuron, terbuthylazine, terbutryn, triasulfuron, thifensulfuron-methyl, tribenuron-methyl, triclopyr, and/or trifluralin.

A preferred chemical pesticide is selected from 1, 2-phenylphenol; 8-hydroxyquinoline sulphate; acibenzolar-5-methyl; actinovate; aldimorph; amidoflumet; ampropylfos; ampropylfos-potassium; andoprim; anilazine; azoxystrobin; benalaxyl; benodanil; benomyl (methyl 1-(butylcarbamoyl)benzimidazol-2-ylcarbamate); benthiavalicarb-isopropyl; benzamacril; benzamacril-isobutyl; bilanafos; binapacryl; biphenyl; blasticidin-S; boscalid; bupirimate; buthiobate; butylamine; calcium polysulphide; capsimycin; captafol; captan (N-(trichloromethylthio)cyclohex-4-ene-1,2-dicarboximide); carbendazim; carboxin; carpropamid; carvone; chinomethionat; chlobenthiazone; chlorfenazole; chloroneb; chlorothalonil; chlozolinate; cis-1-(4-chlorophenyl)-2-(1H-1,2,4-triazol-1-yl)-cycloheptanol; clozylacon; a conazole fungicide such as, for example, (RS)-1-(β-allyloxy-2,4-dichlorophenethyl)imidazole (imazalil; Janssen Pharmaceutica NV, Belgium) and N-propyl-N-[2-(2,4,6-trichlorophenoxy)ethyl] imidazole-1-carboxamide (prochloraz); cyazofamid; cyflufenamid; cymoxanil; cyprodinil; cyprofuram; Dagger G; debacarb; dichlofluanid; dichlone; dichlorophen; diclocymet; diclomezine; dicloran; diethofencarb; diflumetorim; dimethirimol; dimethomorph; dimoxystrobin; dinocap; diphenylamine; dipyrithione; ditalimfos; dithianon; dodine; drazoxolon; edifenphos; ethaboxam; ethirimol; etridiazole; famoxadone; fenamidone; fenapanil; fenfuram; fenhexamid; fenitropan; fenoxanil; fenpiclonil; fenpropidin; fenpropimorph; ferbam; fluazinam (3-chloro-N-(3-chloro-5-trifluoromethyl-2-pyridyl)-α,α,α-trifluoro-2,6-dinitro-p-toluidine); flubenzimine; fludioxonil; flumetover; flumorph; fluoromide; fluoxastrobin; flurprimidol; flusulfamide; flutolanil; folpet (N-(trichloromethylthio)phthalimide); fosetyl-A1; fosetyl-sodium; fuberidazole; furalaxyl; furametpyr; furcarbanil; furmecyclox; guazatine; hexachlorobenzene; hymexazol; iminoctadine triacetate; iminoctadine tris(albesilate); iodocarb; iprobenfos; iprodione; iprovalicarb; irumamycin; isoprothiolane; isovaledione; kasugamycin; kresoxim-methyl; mancozeb (manganesezinc ethylene bis(dithiocarbamate)), maneb (manganese ethylene bis dithiocarbamate), meferimzone; mepanipyrim; mepronil; metalaxyl; metalaxyl-M; metam sodium (sodium methylaminomethanedithioate), methasulfocarb; methfiroxam; methyl 1-(2,3-dihydro-2,2-dimethyl-1H-inden-1-yl)-1H-imidazole-5-carboxylate; methyl 2- [[[cyclopropyl[(4-methoxyphenyl)imino]methyl]thio] -methyl] - .alph- a.-(methoxymethylene)benzeneacetate; methyl 2-[2-[3-(4-chlorophenyl)-1-methyl-allylideneaminooxymethyl]phenyl]-3-meth- oxyacrylate; metiram; metominostrobin; metrafenone; metsulfovax; mildiomycin; monopotassium carbonate; myclozolin; N-(3-ethyl-3,5,5-trimethylcyclohexyl)-3-formylamino-2-hydroxybenzamide; N-(6-methoxy-3-pyridinyl)cyclopropanecarboxamide; N-butyl-8-(1, 1-dimethylethyl)-1-oxaspiro[4.5]decan-3-amine; folpetnitrothal-isopropyl; noviflumuron; ofurace; orysastrobin; oxadixyl; oxolinic acid; oxycarboxin; oxyfenthiin; pencycuron; penthiopyrad; phosdiphen; phthalide; picobenzamid; picoxystrobin; piperalin; polyoxins; polyoxorim; procymidone; propamocarb; propanosine-sodium; propineb; proquinazid; pyraclostrobin; pyrazophos; pyrimethanil; pyroquilon; pyroxyfur; pyrrolnitrine, quinconazole; quinoxyfen; quintozene; silthiofam; sodium tetrathiocarbonate; spiroxamine; sulphur; tecloftalam; tecnazene; tetcyclacis; a thiazole fungicide such as, for example, 2-(thiazol-4-yl)benzimidazole (thiabendazole; e.g. the commercial product TECTO^{®} Flowable SC of Syngenta, USA), thicyofen; thifluzamide; thiophanate-methyl; thiram; tiadinil; tioxymid; tolclofos-methyl; tolylfluanid; triazbutil; triazoxide; tricyclamide; tricyclazole; tridemorph; trifloxystrobin; validamycin A; vinclozolin; zineb (zinc ethylene bis dithiocarbamate); ziram; zoxamide; (2S)- N-[2-[4-[[3-(4-chlorophenyl)-2-propynyl]oxy]-3-methoxyphenyl]ethyl]-3-met- hyl-2-[(methylsulphonyl)amino]butanamide; 1-(1-naphthalenyl)-1H-pyrrole-2,5-dione; 2,3,5,6-tetrachloro-4-(methylsulphonyl)pyridine; 2,4-dihydro-5-methoxy-2-methyl-4-[[[[1-[3-(trifluoromethyl)phenyl]-ethyli-dene]amino]oxy]methyl]phenyl]-3H-1,2,3-triazol-3-one; 2-amino-4-methyl-N-phenyl-5-thiazolecarboxamide; 2-chloro-N-(2,3-dihydro-1, 1, 3-trimethyl-1H-inden-4-yl)-3-pyridinecarboxam- ide; 3,4,5-trichloro-2,6-pyridinedicarbonitrile; 3-[(3-bromo-6-fluoro-2-methyl-1H-indol-1-yl)sulphonyl]-N,N-dimethyl-1H-1,- 2,4-triazole-1-sulphonamide and dithiocarbamate fungicides; strobins such as azoxystrobin, coumoxystrobin, dimoxystrobin, enoxastrobin, fenaminstrobin, fluacrypyrim, flufenoxystrobin, fluoxastrobin, mandestrobin, metominostrobin, orysastrobin, picoxystrobin, pyraclostrobin, pyrametostrobin, pyraoxystrobin, pyriminostrobin, triclopyricarb and trifloxystrobin; triazoles such as epoxiconazole, triadimenol, propiconazole, prothioconazole, metconazole, cyproconazole, tebuconazole, flusilazole and paclobutrazol; anilinopyrimidines such as cyprodinil, mepanipyrim and pyrimethanil; polyene antifungal compounds such as natamycin, nystatin, amphotericin B, trienin, etruscomycin, filipin, chainin, dermostatin, lymphosarcin, candicidin, aureofungin A, aureofungin B, hamycin A, hamycin B and lucensomycin; and/or mixtures thereof.

A further preferred agricultural active ingredient is a natural crop protection product which includes, for example, a copper salt such as Bordeaux mixture (CuSO4.3Cu(OH)2.3CaSO4), copper hydroxide, copper naphthenate, copper oxychloride ((CuCl2•3Cu(OH)2), tribasic copper sulphate (CuSO4.3Cu(OH)2), cufraneb, cuprous oxide, mancopper, and oxine-copper; salicylic acid, castor oil, carvon, cedar oil, cinnamon and cinnamon oil, citric acid, citronella and citronella oil, cloves and clove oil, corn gluten meal, corn oil, cottonseed oil, eugenol, garlic and garlic oil, geraniol, geranium oil, lemongrass oil, linseed oil, malic acid, mint and mint oil, peppermint and peppermint oil, 2-phenethyl propionate (2-phenylethyl propionate), sorbate such as potassium sorbate, putrescent whole egg solids, rosemary and limonene, sesame and sesame oil, soybean oil, thyme and thyme oil, white pepper, and/or mixtures thereof.

A most preferred agricultural active ingredient is selected from the group consisting of folpet (2-[(trichloromethyl)thio]-1H-isoindole-1,3(2H)-dione) a copper salt, azoxystrobin (methyl-(E)-2-{2[6-(2-cyanofenoxy)pyrimidin-4-yloxyl]fenyl}-3-methoxyacrylaat), cyproconazole (2-(4-chlorophenyl)-3-cyclopropyl-1-(1H-1,2,4-triazol-1-yl)butan-2-ol), natamycine, and/or captan (N-(trichloromethylthio)cyclohex-4-en-2-dicarbonimide)

Said active ingredient is present at a concentration of 1-50 % (w/w). Folpet is preferably present at 1-50 % (w/w), more preferred 5-35 % (w/w), more preferred about 20% (w/w). A copper salt is preferably present at 1-50 % (w/w), preferably 2-25 % (w/w), more preferred about 10% (w/w). Azoxystrobin is preferably present at 1-50 % (w/w), preferably 5-35 % (w/w), more preferred about 20% (w/w); cyproconazole is preferably present at 1-50 % (w/w), preferably 5-35 % (w/w), more preferred about 20% (w/w); natamycine is preferably present at 1-50 % (w/w), preferably 5-35 % (w/w), more preferred about 20% (w/w). Captan is preferably present at 1-50 % (w/w), preferably 5-35 % (w/w), more preferred about 20% (w/w).

Said copper salt preferably is copper sulphate, copper hydroxide and/or copperoxychloride.

Said salt in a composition of the invention is present at 5-70 % (w/w), more preferred 10-60 % (w/w), more preferred 20-50 % (w/w). Said salt is selected from the group consisting of a bicarbonate salt, preferably sodium hydrogen carbonate and/or potassium hydrogen carbonate, and/or a phosphite salt. Said salt preferably is a phosphite salt, or comprises a substantial amount of a phosphite salt such as more than 20% (w/w) of a phosphite salt.

A further advantage of phosphite in a composition according to the invention is that it will result in reduced use of the agricultural active ingredient.

The term phosphite, as is used herein, refers to a compound that comprises a phosphite group, or a compound which allows the release of a phosphite ion such as the commercial ethyl hydrogen phosphonate product called Aliette^{®} (Bayer, Germany). The term phosphite includes compounds such as phosphorous acid and phosphonic acid as well as derivatives thereof such as esters and/or alkali metal or alkaline earth metal salts thereof. Suitable examples of phosphite containing compounds are phosphorous acid and its (alkali metal or alkaline earth metal) salts such as potassium phosphites e.g. KH2P03 and K2HP03, sodium phosphites and ammonium phosphites, and (C-C4) alkyl esters of phosphorous acid and their salts such as aluminum ethyl phosphite (fosetyl-AI), calcium ethyl phosphite, magnesium isopropyl phosphite, magnesium isobutyl phosphite, magnesium sec-butyl phosphite and aluminum N-butyl phosphite.

A preferred phosphite is a phosphite salt such as KH2PO3, K2HPO3, NaH2PO3, Na2HPO3, (NH4)2HPO3, (NH4)H2PO3, ethyl hydrogen phosphonate, phosphorous acid, and mixtures of these compounds. A mixture of KH2PO3 and K2HPO3 is suitably obtained by adding KOH or K2CO3 to a KH2PO3 composition at a final pH of 4-9.

A composition according to the invention preferably further comprises lignosulfonate. Said lignosulfonate is preferably present as a lignosulfonate salt such as, for example, calcium lignosulfonate, sodium lignosulfonate, potassium lignosulfonate, ammonium lignosulfonate, magnesium lignosulfonate and mixtures thereof.

When present in a composition of the invention, said lignosulfonate preferably is present in a relative amount of between 0.1-30 % (w/w), preferably between 0.2-5 % (w/w), preferably about 0.5 % (w/w).

Said lignosulfonate preferably is calcium lignosulfonate.

The alkyl polysaccharide in a composition according to the invention preferably is a non-ionic polysaccharide derivative of the general formula I,

R1-(OG)n (X)m (I)

wherein R1 is a hydrophobic moiety; G is a saccharide residue, X is a succinic anhydride residue, and n and m are independently chosen from an average value which is between 1 and 200, as is described in US patent number 5.783.692. As an alternative, m, but not n, may be 0.

R1 is preferably chosen from C1 to C40 branched or linear alkyl groups. More preferably, R1 is chosen from the group comprising C1 to C14 branched or linear alkyl groups and may even more preferably be chosen from C4 to C12 linear alkyl.

In a most preferred alkyl polysaccharide, R1 is a C8-C11 alkylpolysaccharide, or even more preferred a C8-C10 and/or C9-C11 alkylpolysaccharide. A most preferred alkyl polysaccharide is AL-2559 and/or AL-2575 (Croda Crop Care, Snaith Goole, UK), and the like.

Said styrene (meth)acrylic copolymer preferably comprises one or more monomers selected from the group consisting of acrylamidopropyl methyl sulfonic acid, methallyl sulfonic acid, 3-sulfopropyl acrylate, 3-sulfopropyl methacrylate, hydroxypropyl methacrylate, hydroxypropyl acrylate, hydroxyethyl methacrylate, and/or hydroxyethyl acrylate; and their sodium, potassium, ammonium, monoethanolamine, and triethanolamine salts, the resulting polymer having a minimum number average molecular weight (in amu), of 1,200.

Preferred hydrophobic monomers are selected from vinylaromatic monomers such as styrene monomers and C2-C12-monomers. Preferably, the (meth)acrylic copolymer comprises, in polymerised form, (i) at least one C3-C5 monoethylenically unsaturated carboxylic acid monomer, in particular acrylic acid or methacrylic acid, and (ii) at least one hydrophobic monomer selected from styrene monomers and C2-Cl2 monomers. The weight ratio from acid monomer to hydrophobic monomer is preferably in the range of from 10:1 to 1:3; preferably from 5:1 to 1:2.

The styrene (meth)acrylic copolymer preferably comprises acrylamidopropyl methyl sulfonic acid monomers. A most preferred styrene (meth)acrylic copolymer is Atlox Metasperse^{™} 500 L and/or Atlox MetasperseTM 550S (Croda Crop Care, Snaith Goole, UK), and the like.

Said composition may further comprise a thickening agent, an antioxidant, and/or an anti-foam forming agent.

A thickening agent, when present, is preferably selected from xanthan gum, modified xanthan gum, agar, succinoglycan gum (Rheozan), alginic acid, alginate, a hydrated magnesium-aluminum silicate, for example attapulgite, (Attagel^{®}; BASF), calcium lactobionate, carrageenan, OptiXan-D ^{®}; gellan gum, and guar gum. A composition may also comprise two or more different stabilizing agents. A stabilizer is preferably present in an amount of between 0 to up to 10 % (w/v), more preferred between 0.01 to up to 5 % (w/v), more preferred between 0.05 to up to 0.5 % (w/v), more preferred about 0.05 % (w/v).

An antioxidant, when present, is preferably selected from amino acids (e.g. glycine, histidine, tyrosine, tryptophan) and their derivatives, imidazole (e.g. urocanic acid) and derivatives, vitamin C and derivatives (such as ascorbylpalmitate and ascorbyltetraisopalmitate, Mg-ascorbylphosphate, Na-ascorbylphosphate, ascorbyl-acetate), tocopherol and derivates (such as vitamin-E-acetate), mixtures of vitamin E, vitamin A and derivatives (vitamin-A-palmitate and -acetate) as well as coniferyl benzoate, rutinic acid and derivatives, α-glycosylrutin, ferulic acid, citric acid, furfurylideneglucitol, carnosine, butylhydroxytoluene, butylhydroxyanisole, and trihydroxybutyrophenone. A composition may also comprise two or more different antioxidants. An anti-oxidant is preferably present in an amount between 0 to of up to 20% (w/v), more preferred between 0.1 to up to 10 % (w/v), more preferred between 1 to up to 5 % (w/v), more preferred about 3 % (w/v).

An anti-foam forming agent, when present, is preferably selected from polymethylsiloxane, simethicone octanol, and silicone oils. The composition may also comprise two or more different anti-foam forming agents. An anti-foam agent is preferably present in an amount of between 0 to up to 10 % (w/v), more preferred between 0.05 to up to 5 % (w/v), more preferred between 0.1 to up to 1 % (w/v), more preferred about 0.05 % (w/v).

Typical examples of a composition are 250 g/l folpet, 375 g/l Na2HPO3, 5,25 g/l of a styrene (meth)acrylic copolymer, and 25 g/l of a alkyl polysaccharide; 200 g/l copper oxychloride, 375 g/l Na2HPO3, 5,5 g/l of a styrene (meth)acrylic copolymer, and 25 g/l of a alkyl polysaccharide; 250 g/l copper hydroxide, 375 g/l Na2HPO3, 7 g/l of a styrene (meth)acrylic copolymer, and 30 g/l of a alkyl polysaccharide; 30 g/l natamycin, 400 g/l Na2HPO3, 10 g/l of a styrene (meth)acrylic copolymer, and 30 g/l of a alkyl polysaccharide; 200 g/l azoxystrobin/80 g/l cyproconazole, 375 g/l Na2HPO3, 7.5 g/l of a styrene (meth)acrylic copolymer, and 30 g/l of a alkyl polysaccharide, and 40 g/l limonene, 500 g/l Na2HPO3, 5 g/l of a styrene (meth)acrylic copolymer, and 30 g/l of a alkyl polysaccharide.

A composition according to the invention is in the form of a suspension concentrate (SC) or a dispersion concentrate (DC). Preferably, a composition of the invention is in the form of a suspension concentrate. A "suspension concentrate", as used herein, refers to a suspension of solid particles in a liquid intended for dilution with water prior to use. A "dispersion concentrate" as used herein refers to a dispersion of solid particles in a liquid intended for dilution with water prior to use.

The invention further provides a method of protecting an agricultural plant or plant part against a pathogen, comprising applying to said agricultural plant or to said plant part a composition according to the invention.

Prior to use, a composition according to the invention is preferably dissolved or dispersed in water or diluted with water to contain between 0,001 and 5 w/v% of the agricultural active ingredient. If required, a sticking agent is added to the diluted aqueous suspension. Said diluted aqueous composition is used, for example, to control powdery mildew and downy mildew infections of apples, gooseberries, hops, ornamentals, grapes, peaches, strawberries, soy bean, and sugar beets, scab, including common scab, apple scab, black scab on potatoes, pear scab, and powdery scab, brown rot of peaches, gall mite on blackcurrant, peanut leafspot, mildew on roses, and mites on beans, carrots, lucerne, melons, and tomatoes. For this, the aqueous composition is preferably sprayed over a plant, or part thereof.

Alternatively, a plant of part thereof is coated with a diluted composition comprising an agricultural active ingredient by submerging the plant or part thereof in the diluted aqueous composition to protect the plant of part thereof against a pathogen. A preferred part of a plant that is coated with a composition according to the invention, or with a dilution thereof, is seed. A further preferred part of a plant that is coated with a composition according to the invention, or with a dilution thereof, is a fruit such as, for example, a citrus fruit such as orange, mandarin and lime, a pome fruit such as apple and pear, a stone fruit such as almond, apricot, cherry, damson, nectarine, tomato and watermelon; a tropical fruit such as banana, mango, lychee and tangerine. A preferred fruit is a citrus fruit, such as orange.

A further preferred part that is coated with a composition according to the invention, or with a dilution thereof, is a post-harvest fruit, such as a citrus fruit such as orange, mandarin and lime, a pome fruit such as apple and pear, a stone fruit such as almond, apricot, cherry, damson, nectarine, tomato and watermelon; a tropical fruits such as banana, mango, lychee and tangerine. A preferred post-harvest fruit is a citrus fruit, such as orange, and a tropical fruit such as banana.

The invention further provides a method of preventing, reducing and/or eliminating the presence of a pathogen on a plant or on one or more plant parts, comprising applying to said plant or plant part a composition according to the invention, or a dilution thereof. A preferred plant part is selected from seed, leaf and fruit such as, for example, a citrus fruit such as orange, mandarin and lime, a pome fruit such as apple and pear, a stone fruit such as almond, apricot, cherry, nectarine; a tropical fruit such as mango, lychee and tangerine. A preferred fruit is a citrus fruit, such as orange. A most preferred part is a post-harvest fruit.

A preferred plant part comprises seed, leaf or fruit, preferably a post-harvest fruit.

The invention further provides a method for treatment of a soil comprising providing the composition according to the invention, or a dilution thereof, and adding the composition to the soil.

The composition, or dilution thereof, can be added directly to the soil according to any method known in the art e.g. by spraying it on the soil, mixing it through the soil, or by dipping the soil, or compounds which will be added to the soil, in the composition. In addition, the composition, or dilution thereof, may also be added to an ingredient or to any composition applied to the soil, such as fertilizers, nutrient compositions and agents against other unwanted organisms such as insects, nematodes and/or mites.

A composition, or dilution thereof, may be applied at any suitable moment which of course will differ per crop and growth conditions such as the climate. It can e.g. be added to the soil before seeding or planting; before, during and/or after growth of the crop; and at different seasons such as before during and after the spring, summer, autumn and/ or winter.

The composition according to the invention, or dilution thereof, can be applied to an agricultural product such as a plant by spraying. Other methods suitable for applying the composition, or dilution thereof, in liquid form to the products are also a part of the present invention. These include, but are not limited to, dipping, watering, drenching, introduction into a dump tank, vaporizing, atomizing, fogging, fumigating, painting, brushing, misting, dusting, foaming, spreading-on, packaging and coating {e.g. by means of wax or electrostatically). In addition, the aqueous composition may also be injected into the soil. Spraying applications using automatic systems are known to reduce the labor costs and are cost-effective. Methods and equipment well-known to a person skilled in the art can be used for that purpose. The composition, or dilution thereof, can be regularly sprayed, when the risk of infection is high. When the risk of infection is lower spray intervals may be longer.

A composition, or dilution thereof, can also be used for treatment of soil. The composition, or dilution thereof, can be applied in/on any soil applied outside or inside such as in greenhouses. Said soil can be used for the production of any agricultural or horticultural product herein to be understood in a very broad sense and includes, but is not limited to edible crops such as cereals, vegetables, fruit, nuts/beans/seeds, herbs/spices and mushrooms; industrial crops; crops grown for feed; ornamental crops such as plants, flowers, bushes and trees.

Preferred examples of cereals are wheat, rice, oats, barley and maize. Preferred examples of vegetables are lettuce, beans, peas, cabbage, carrots, onions, potatoes, seed-potatoes, tomatoes, peppers, cucumbers, asparagus, paprika, aubergines and pumpkins. Preferred examples of fruit are apples, pears, cherries, peaches, apricots, plums, bananas, grapes, pineapples, papayas, mangos, kiwis, melons, oranges, grapefruits, lemons, mandarins, limes, strawberries, blackberries, currants, lychees, olives and avocados. Preferred examples of nuts, beans and seeds are peanuts, ground-nuts, almonds, cashew nuts, pistachio nuts, coconuts, coffee, cocoa, sunflowers and rapeseed. Preferred examples of industrial crops are sorghum, soya, palm oil, sugar beets, sugarcane, cotton, jute, tobacco, hops, rubber plants and tea.

A preferred soil is a growth substrate for mushrooms. In case of mushroom cultivation a composition of the invention, or dilution thereof, can be mixed through the soil (e.g. compost) or sprayed on the soil and/or top-layer (e.g. the casing) at any stage of the production process of the soil and/or at any stage of the mushroom growth cycle such as: before during or after fermentation of the compost; after spawing; after casing; together with one or more of the watering steps; before, during and after pinning; after harvesting the first and/or second harvest; or any combination of the above mentioned stages. A composition can also be added to the spawn, the gypsum, the nutrient supplements and other additives usually applied in mushroom cultivation, or to any substance which is part of the mushroom growth substrate.

Preferred examples of mushrooms are edible mushrooms and mushrooms grown for pharmaceutical or industrial purposes. Examples of edible mushrooms are *Agaricus bisporus* (regular mushroom), *Pleurotus ostreatus* (oyster mushroom), *Lentinus edotus* (Shiitake mushroom), *Pholiota aegerita* (Poplar mushroom) and *Lepista nuda* (Blue stalk mushroom).

### Examples

### Example 1

Experiments were performed to search for the desired surfactant combinations which gave a stable suspension of Folpet in combination with Na2HPO3. All experiments were performed with Folpet at 250 gram/liter (g/l) and Na2HPO3 at 375 g/l. A summary of the experiments is provided in Table 1.

**Table 1. Combinations of surfactants for stabilizing a suspension of Folpet (250 g/l) and Na2HPO3 (375 g/l).**

| Surfactant 1 (g/l) | Surfactant 2 (g/l) |
|---|---|
| Sophoclean (30) | Synperonic PE/L61 (30) |
| AL2575 (30) | Synperonic PE/L61 (30) |
| Geronol CF/AR (30) | Synperonic PE/L61 (30) |
| Aghro FKC 1000 (30) | Synperonic PE/L61 (30) |
| AL2575 (30) | Atlas G5002-L (30) |
| AL2575 (30) | Atlox 4915 (6) |
| AL2575 (30) | Sophrophor FL (9) |
| AL2575 (30) | Atlox 4913 (16) |
| Sophoclean (30) | Atlox 4913 (16) |
| Sophoclean (30) | Sophrophor FL (9) |
| AL2575 (25) | Metasperse 550S (5) |

Sophoclean was purchased from Wheatoleo, 51110 Pomade, France.

Synperonic PE/ L61, AL2575, Metasperse 550S, Atlas G5002-L, Atlox 4915 and Atlox 4913 were purchased from Croda Crop Care, Snaith Goole, UK.

Geronol CF/AR, Aghro FKC 1000, and Sophrophor FL were purchased from Rhodia (Solvay), Bruxelles, Belgium.

The method which was applied to check whether a formulation is stable or not is CIPAC MT 46.3 (Accelerated storage procedures), by storing the formulations at 54 °C over a period of 2 weeks.

From all tested combinations, a stable suspension was only obtained when using Metasperse 550S in combination with AL2575. Subsequent experiments showed that also combinations of Metasperse 500L and AL2559, both of Croda Crop Care, Snaith Goole, UK, provided a stable suspension of Folpet in combination with Na2HPO3.

It was further found that combinations of Sophrophor FL, Synperonic PE/ L61 and Heliwet NLS90 (Mosselman SA., Ghlin, Belgium) did not result in a stable composition comprising copper oxychloride (200 g/l) and Na2HPO3 (375 g/l).

In addition, it was found that Metasperse 550S and AL2575 also provided a stable suspension of Na2HPO3 (375 g/l) in combination with other active ingredients such as copper hydroxide (250 g//l), natamycine (30 g/l), copper oxichoride (200 g/l), azoxystrobin and cyproconazole (200 g/l and 80 g/l, respectively. The stabilizing effects of Metasperse 500L or Metasperse 550S, in combination with AL2575 or AL2559, were found in the range of 0.2-2% (w/w) for Metasperse, and 1-10% (w/w) for AL2575 and AL2559.

### Example 2

Experiments were performed to learn whether the above identified surfactant combination, which gave a stable suspension of Folpet in combination with Na2HPO3, would yield a stable suspension in the absence of a salt, using CIPAC MT 46.3 (Accelerated storage procedures), by storing the formulations at 54 °C over a period of 2 weeks. A summary of the experiments is provided in Table 2.

**Table 2. Combinations of an active ingredient and surfactants in the absence of a salt.**

| Active ingredient ( g/l) | Aqueous phase | MetaSperse 550S | AL2575 |
|---|---|---|---|
| Azoxystrobin/Cyproconazole180/60 | water | 7 g/l | 20 g/l |
| Azoxystrobin/Cyproconazole180/60 | water | 10.5 g/l | 30 g/l |
| Azoxystrobin/Cyproconazole180/60 | water | 14 g/l | 40 g/l |
| CuOxyChloride 200 | water | 5.5 g/l | 25 g/l |

It was found that none of these formulations yielded a stable formulation.

It was concluded that a salt is required for generation of a stable composition comprising an agricultural active ingredient, an alkyl polysaccharide and a styrene (meth)acrylic copolymer.

### Example 3

In this example we present additional tests to show the specificity of this surfactant combination in high salt fungicide products.

The following alternative surfactants have been tested in different combinations: Morwet D425 (CAS no.: 9084-06-4; Sodium salt of alkylnaphtalene sulfonate formaldehyde condensate). Supplier: Akzo Nobel.

Heliwet NLS 90 (CAS no.:85586-07-8; sodiumlaurylsulphate). Supplier: Mosselman. Emulsogen^{®} SF8 (CAS no.:577-11-7; sodium di(2-ethylhexyl) sulfosuccinate). Supplier: Clariant.

The tests were performed in a formulation containing the fungicide Folpet and the salt disodiumhydrogenphosphite. A "control" formulation, containing the surfactants Atlox 2575 + Metasperse 550S, was composed of:

| | G/liter |
|---|---|
| H3PO3 99% | 244.05 |
| NaOH 99% | 238.40 |
| H2O | 489.10 |
| Calciumlignosufonate | 7.50 |
| Chitosan Xynil | 1.50 |
| HCl (36%) | 62.00 |
| Silcolapse 416 | 6.00 |
| Metasperse 550S | 5.25 |
| AL 2575 | 30.00 |
| Folpet techn. | 256.00 |
| Kelzan ASX (2% solution) | 85.20 |

Different combinations of the aforementioned surfactants were tested by replacing the Metasperse 550S and/or AL 2575 surfactant, in the "control" formulation as presented in the table below. The formulations were tested for stability according to CIPAC MT 46.1.

| | formulation | | | | | |
|---|---|---|---|---|---|---|
| Ingredients | Control | 1 | 2 | 3 | 4 | 5 |
| H3PO3 techn | 244.05 | 244.05 | 244.05 | 244.05 | 244.05 | 244.05 |
| NaOH techn | 238.40 | 238.40 | 238.40 | 238.40 | 238.40 | 238.40 |
| H2O | 489.10 | 489.10 | 489.10 | 489.10 | 489.10 | 489.10 |
| Calciumlignosulfonate | 7.50 | 7.50 | 7.50 | 7.50 | 7.50 | 7.50 |
| Chitosan Xynil | 1. 50 | 1.50 | 1.50 | 1. 50 | 1.50 | 1.50 |
| HCL 36% | 62.0 | 62.0 | 62.0 | 62.0 | 62.0 | 62.0 |
| Silcolapse 416 | 6.0 | 6.0 | 6.0 | 6.0 | 6.0 | 6.0 |
| Folpet Techn. | 256.0 | 256.0 | 256.0 | 256.0 | 256.0 | 256.0 |
| Kelzan ASX 2% sol. | 85.2 | 85.2 | 85.2 | 85.2 | 85.2 | 85.2 |
| Morwet D425 | xxx | 5.25 | xxx | xxx | xxx | xxx |
| Emulsogen SF8 | xxx | xxx | 5.25 | xxx | 25.0 | xxx |
| Heliwet NLS 90 | xxx | xxx | xxx | 5.25 | xxx | 25.0 |
| Metasperse 550S | 5.25 | xxx | xxx | xxx | 5.25 | 5.25 |
| AL 2575 | 25.0 | 25.0 | 25.0 | 25.0 | xxx | xxx |

Conclusions regarding stability:
Control formulation: good wetting of Folpet active ingredient, good grinding and stable product. Conclusion: formulation is stable.

Formulation 1: Wetting of the active ingredient (Folpet) is too weak. The pre-mill cannot be grinded because of (too) high viscous product. Conclusion: formulation not stable.

Formulation 2: Wetting seems good. The Kelzan ASX solution was found not to be compatible with pre-mill. During addition of Kelzan the pre-mill becomes extremely viscous. Conclusion: formulation not stable.

Formulation 3: Wetting of Folpet turns out to be very poor. Foaming properties too high. Conclusion: formulation not stable.

Formulation 4: No wetting. Pre-mill starts to flocculate immediately. Conclusion: formulation not stable.

Formulation 5: Wetting seemed good in the beginning. After 10 minutes the pre-mill became very viscous with too much foam (creamy). Conclusion: formulation not stable.

These results show that the combination of an alkyl polysaccharide such as AL 2575 and a styrene (meth)acrylic copolymer such as Metasperse is needed for a stable formulation.

## Claims

1. Composition comprising an agricultural active ingredient at 1-50 % (w/w), a salt at 5-70 % (w/w), an alkyl polysaccharide at 1-10 % (w/w), and a styrene (meth)acrylic copolymer at 0.2-3 % (w/w), wherein the salt is selected from a bicarbonate salt and/or a phosphite salt, wherein the composition is in the form of a suspension concentrate or a dispersion concentrate.

2. Composition according to claim 1, wherein the salt is a phosphite salt.

3. Composition according to claim 1 or claim 2, wherein the agricultural active ingredient is 2-[(trichloromethyl)thio]-1H-isoindole-1,3(2H)-dione, a copper salt, methyl-(E)-2-{2[6-(2-cyanofenoxy)pyrimidin-4-yloxyl]fenyl}-3-methoxyacrylaat, 2-(4-chlorophenyl)-3-cyclopropyl-1-(1H-1,2,4-triazol-1-yl)butan-2-ol; natamycine, and/or N-trichloromethylthio)cyclohex-4-en-1,2-dicarbonimide.

4. Composition according to any one of claims 1-3, wherein the agricultural active ingredient is copper sulphate, copper hydroxide and/or copperoxychloride.

5. Composition according to any one of claims 1-4, further comprising lignosulfonate.

6. Composition according to any one of claims 1-5, wherein the alkyl polysaccharide is a C8-C11 alkylpolysaccharide.

7. Composition according to any one of claims 1-6, wherein the alkyl polysaccharide is a C8-C10 and/or C9-C11 alkylpolysaccharide.

8. Composition according to any one of claims 1-7, wherein the styrene (meth)acrylic copolymer comprises one or more monomers selected from the group consisting of acrylamidopropyl methyl sulfonic acid, methallyl sulfonic acid, 3-sulfopropyl acrylate, 3-sulfopropyl methacrylate, hydroxypropyl methacrylate, hydroxypropyl acrylate, hydroxyethyl methacrylate, and/or hydroxyethyl acrylate; and their sodium, potassium, ammonium, monoethanolamine, and triethanolamine salts.

9. Composition according to any one of claims 1-8, wherein the styrene (meth)acrylic copolymer comprises acrylamidopropyl methyl sulfonic acid monomers.

10. A method of protecting an agricultural plant or plant part against a pathogen, comprising applying to said agricultural plant or to said plant part a composition according to any one of claims 1-9.

11. A method of preventing, reducing and/or eliminating the presence of a pathogen on a plant or on one or more plant parts, comprising applying to said plant or plant part a composition according to any one of claims 1-9.

12. The method of any one of claims 10-11, wherein the plant part comprises seed, leaf or fruit.

13. The method of any one of claims 10-12, wherein the plant part is a post-harvest fruit.

14. A method for treatment of a soil comprising
a) providing the composition according to any one of claims 1-9; and
b) adding the composition to the soil.

15. The method of claim 14, wherein the soil is a growth substrate for mushrooms.

## Patentansprüche

1. Zusammensetzung, umfassend einen landwirtschaftlichen Wirkstoff mit 1-50 Gew.-%, ein Salz mit 5-70 Gew.-%, ein Alkylpolysaccharid mit 1-10 Gew.-%, und ein Styrol(meth)acryl-Copolymer mit 0,2-3 Gew.-%, wobei das Salz ausgewählt ist aus einem Bicarbonatsalz und/oder einem Phosphitsalz, wobei die Zusammensetzung in der Form eines Suspensionskonzentrats oder eines Dispersionskonzentrats ist.

2. Zusammensetzung nach Anspruch 1, wobei das Salz ein Phosphitsalz ist.

3. Zusammensetzung nach Anspruch 1 oder Anspruch 2, wobei der landwirtschaftliche Wirkstoff 2-[(Trichlormethyl)thio]-1H-isoindol-1,3(2H)-dion, ein Kupfersalz, Methyl-(E)-2-{2[6-(2-cyanofenoxy)pyrimidin-4-yloxyl]fenyl}-3-methoxyacrylat, 2-(4-Chlorphenyl)-3-cyclopropyl-1-(1H-1,2,4-triazol-1-yl)butan-2-ol; Natamycin, und/oder N-(trichlormethylthio)cyclohex-4-en-1,2-dicarbonimid ist.

4. Zusammensetzung nach einem der Ansprüche 1 - 3, wobei der landwirtschaftliche Wirkstoff Kupfersulfat, Kupferhydroxid und/oder Kupferoxychlorid ist.

5. Zusammensetzung nach einem der Ansprüche 1 - 4, ferner umfassend Lignosulfonat.

6. Zusammensetzung nach einem der Ansprüche 1 - 5, wobei das Alkylpolysaccharid ein C8-C11-Alkylpolysaccharid ist.

7. Zusammensetzung nach einem der Ansprüche 1 - 6, wobei das Alkylpolysaccharid ein C8-C10- und/oder C9-C11-Alkylpolysaccharid ist.

8. Zusammensetzung nach einem der Ansprüche 1 - 7, wobei das Styrol(meth)acryl-Copolymer ein oder mehrere Monomere umfasst, ausgewählt aus der Gruppe, bestehend aus Acrylamidopropylmethylsulfonsäure, Methallylsulfonsäure, 3-Sulfopropylacrylat, 3-Sulfopropylmethacrylat, Hydroxypropylmethacrylat, Hydroxypropylacrylat, Hydroxyethylmethacrylat und/oder Hydroxyethylacrylat; und deren Natrium-, Kalium-, Ammonium-, Monoethanolamin- und Triethanolaminsalzen.

9. Zusammensetzung nach einem der Ansprüche 1 - 8, wobei das Styrol(meth)acryl-Copolymer Acrylamidopropylmethylsulfonsäure-Monomere umfasst.

10. Verfahren zum Schützen einer landwirtschaftlichen Pflanze oder eines Pflanzenteils gegen ein Pathogen, umfassend Anwenden auf die landwirtschaftliche Pflanze oder auf das Pflanzenteil eine Zusammensetzung nach einem der Ansprüche 1 - 9.

11. Verfahren zum Vorbeugen, Verringern und/oder Beseitigen des Vorhandenseins eines Pathogens auf einer Pflanze oder auf einem oder mehreren Pflanzenteilen, umfassend Anwenden auf die Pflanze oder den Pflanzenteil eine Zusammensetzung nach einem der Ansprüche 1 - 9.

12. Verfahren nach einem der Ansprüche 10 - 11, wobei der Pflanzenteil Samen, Blatt oder Frucht umfasst.

13. Verfahren nach einem der Ansprüche 10 - 12, wobei der Pflanzenteil eine Nach-Ernte-Frucht ist.

14. Verfahren zur Behandlung eines Bodens umfassend
a) Bereitstellen der Zusammensetzung nach einem der Ansprüche 1 - 9; und
b) Hinzufügen der Zusammensetzung zu dem Boden.

15. Verfahren nach Anspruch 14, wobei der Boden ein Wachstumssubstrat für Pilze ist.

## Revendications

1. Composition comprenant 1-50 % (pds/pds) d'un ingrédient agricole actif, 5-70 % d'un sel à (pds/pds), 1-10 % (pds/pds) d'un alkyl polysaccharide, et 0,2-3 % (pds/pds)) d'un copolymère (méth)acrylique de styrène, dans lequel le sel est choisi parmi les sels de bicarbonate et/ou les sels de phosphite, laquelle composition est sous la forme d'un concentré en suspension ou d'un concentré en dispersion.

2. Composition selon la revendication 1, dans laquelle le sel est un sel de phosphite.

3. Composition selon la revendication 1 ou la revendication 2, dans laquelle l'ingrédient agricole actif est la 2-[(trichlorométhyl)thio]-1H-isoindole-1,3(2H)-dione, un sel de cuivre, la méthyl-(E)-2-{2[6-(2-cyanofenoxy)pyrimidine-4-yloxyl]phényl}-3-méthoxyacrylate, le 2-(4-chlorophényl)-3-cyclopropyl-1-(1H-1,2,4-triazol-1yl)butan-2-ol; la natamycine et/ou le N-(trichlorométhylthio)cyclohex-4-en-1,2dicarbonimide.

4. Composition selon l'une quelconque des revendications 1 à 3, dans laquelle l'ingrédient agricole actif est le sulfate de cuivre, l'hydroxyde de cuivre et/ou l'oxychlorure de cuivre.

5. Composition selon l'une quelconque des revendications 1 à 4, comprenant en outre un lignosulfonate.

6. Composition selon l'une quelconque des revendications 1 à 5, dans laquelle l'alkylpolysaccharide est un alkylpolysaccharide en C8-C11.

7. Composition selon l'une quelconque des revendications 1 à 6, dans laquelle l'alkylpolysaccharide est un alkylpolysaccharide en C8-C10 et/ou C9-C11.

8. Composition selon l'une quelconque des revendications 1 à 7, dans laquelle le copolymère styrène (méth)acrylique comprend un ou plusieurs monomères choisis dans le groupe constitué par l'acide acrylamidopropyl méthyl sulfonique, l'acide méthallyl sulfonique, l'acrylate de 3-sulfopropyle, le méthacrylate de 3-sulfopropyle, le méthacrylate d'hydroxypropyle, l'acrylate d'hydroxypropyle, le méthacrylate d'hydroxyéthyle et/ou l'acrylate d'hydroxyéthyle ; et leurs sels de sodium, de potassium, d'ammonium, de monoéthanolamine et de triéthanolamine.

9. Composition selon l'une quelconque des revendications 1 à 8, dans laquelle le copolymère styrène (méth)acrylique comprend des monomères d'acide acrylamidopropyl méthyl sulfonique.

10. Un procédé de protection d'une plante agricole ou partie de plante contre un pathogène, comprenant l'application sur ladite plante agricole ou sur ladite partie de plante d'une composition selon l'une quelconque des revendications 1-9.

11. Un procédé de prévention, de réduction et/ou d'élimination de la présence d'un pathogène sur une plante ou sur une ou plusieurs parties de plante, comprenant l'application sur ladite plante ou partie de plante d'une composition selon l'une quelconque des revendications 1-9.

12. Le procédé selon l'une quelconque des revendications 10 à 11, dans lequel la partie de plante comprend une graine, une feuille ou un fruit.

13. Le procédé selon l'une quelconque des revendications 10 à 12, dans lequel la partie de plante est un fruit post-récolte.

14. Le procédé de traitement d'un sol comprenant
a) la fourniture de la composition selon l'une quelconque des revendications 1 à 9 ; autre
b) l'ajout de la composition au sol.

15. Le procédé selon la revendication 14, dans lequel le sol est un substrat de croissance pour champignons.
